# DEMANDE DE BREVET EUROPEEN

(11) **EP 0 968 917 A1**
(43) Date de publication de la demande: **05.01.2000**
(21) Numéro de dépôt: 98810609.2
(22) Date de dépôt: 01.07.1998
(51) Int. Cl.: B64D 17/02

(54) **Système de valves limitant le reflux d'air, appliqué aux ouvertures du bord d'attaque d'un parapente**

(71) Demandeur: Mayoraz, Jacques, 1981 Vex (CH); Mayoraz, Pierre, 1981 Vex (CH); Debons, Joel, 1965 Savièse (CH)
(72) Inventeur: Mayoraz, Jacques, 1981 Vex (CH); Mayoraz, Pierre, 1981 Vex (CH); Debons, Joel, 1965 Savièse (CH)

(57) **Abrégé**

Ouverture de cellule de parapente munie d'une valve limitant le reflux d'air cousue sur le pourtour de ladite ouverture et maintenue à l'intérieur de la cellule par une couture bilatérale sur les nervures inter-cellules.

## Description

L'invention concerne les ouvertures de cellules de parapentes qui ont comme fonction de maintenir une légère surpression d'air à l'intérieur de l'aile.

Les parapentes actuels sont formés d'une multitude de cellules qui possèdent des ouvertures sur la partie inférieure de leur bord d'attaque. Ces ouvertures alimentent une pression d'air à l'intérieur de l'aile pendant le vol.
Cette pression d'air maintient la forme et le profil aérodynamique du parapente.

La présente invention concerne les entrées d'air des cellules de parapentes qui, jusqu'à présent, laissent libre passage à l'air dans les deux sens. Ces ouvertures ont cependant l'inconvénient, lors des variations de pression d'air externes, de laisser s'échapper l'air utile au maintien du profil de l'aile, engendrant ainsi des risques de fermeture de ladite aile.

L'invention a pour but d'empêcher un reflux indésirable de l'air vers l'extérieur de l'aile et d'y maintenir une pression plus élevée et plus homogène.

Conformément à l'invention, ce but est atteint dans un système de valves appliquées à chaque ouverture de cellule et maintenues à l'intérieur de ladite cellule par une couture longitudinale sur chaque nervure inter-cellule.

Des ouvertures de cellules de parapente munies de valves conçues conformément à l'invention présentent un certain nombre d'avantages :
Etant donné que le flux d'air à l'entrée des cellules est unidirectionnel, la pression interne de l'aile est augmentée et la répartition de ladite pression est plus homogène ; ceci confère à l'aile une plus grande stabilité ainsi qu'une diminution de la tendance aux fermetures lors des variations de la pression externe en conditions atmosphériques turbulentes.
De plus, de par l'augmentation de la pression interne, la meilleure répartition de celle-ci et la baisse du risque de fermeture, l'allongement du parapente peut être augmenté, améliorant ainsi ses performances et sa finesse. Par ailleurs, du fait de l'augmentation de la pression exercée par le retour d'air entre la face supérieure des valves et la partie frontale du bord d'attaque, l'angle d'incidence imprimé à l'aile par l'accélérateur peut être rabaissé, augmentant ainsi la plage de vitesse de ladite aile.

L'invention est décrite ci-après à l'aide d'un exemple et de références aux dessins joints dans lesquels :

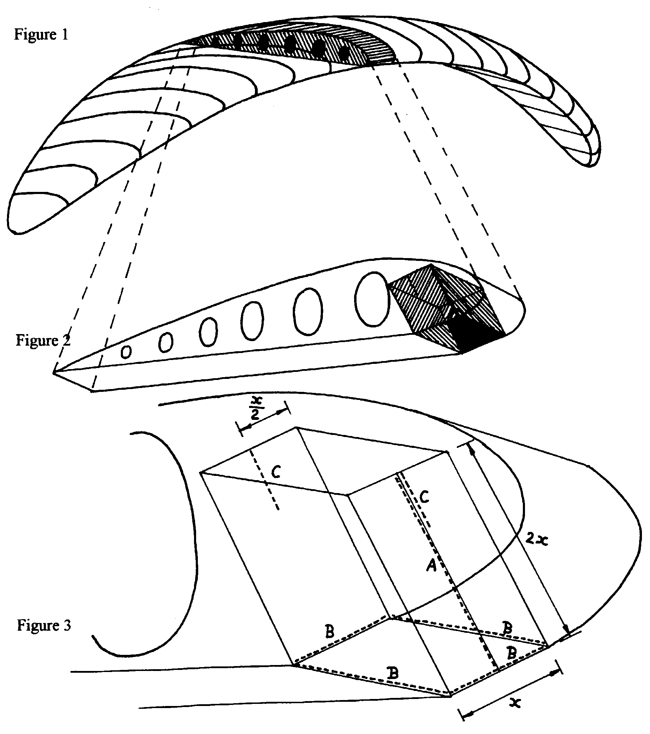

- La figure 1 représente une vue générale d'une aile de parapente sur laquelle est mise en évidence une cellule.
- La figure 2 représente une vue en perspective d'une cellule de parapente munie d'une valve limitant le reflux d'air conformément à l'invention, cousue à l'entrée du bord d'attaque de ladite cellule ainsi qu'aux deux nervures inter-cellules.
- La figure 3 représente une vue en perspective d'une entrée de bord d'attaque d'une cellule de parapente à laquelle est fixée une valve limitant le reflux d'air conformément à l'invention. Les coutures propres à la confection et à la fixation de ladite valve sont symbolisées par les traits tillés.

La valve conformément à l'invention est fabriquée dans de la toile de parapente très légère et résistante afin de ne pas augmenter considérablement le poids de l'aile. Elle est tout d'abord découpée selon les dimensions de l'ouverture du caisson de manière à ce que la profondeur de la valve (2 x) corresponde au double de la hauteur de la cellule (x). Ensuite est effectuée la couture A qui rend sa forme tubulaire à ladite valve. Cette opération terminée, la valve est ajustée et cousue selon les coutures B à la lisière de l'ouverture de la cellule. Enfin, la valve est maintenue à l'intérieur de la cellule par une couture longitudinale sur les deux nervures inter-cellules de manière à ce que la distance (x/2) qui sépare l'extrémité de la couture C à l'extrados corresponde à la moitié de la hauteur (x) de la valve, ladite hauteur (x) correspondant également à la hauteur de la cellule.
Toutes les coutures A, B, C sont faites selon la méthode conventionnelle utilisée dans la fabrication des parapentes. Les valves sont appliquées à l'ensemble des ouvertures de cellules du parapente.

## Revendications

1. Ouverture de bord d'attaque de parapente caractérisée en ce qu'à ladite ouverture est fixée une valve limitant le reflux d'air.
